# EUROPEAN PATENT APPLICATION

(11) **EP 2 894 848 A2**
(43) Date of publication of application: **15.07.2015**
(21) Application number: 13793353.7
(22) Date of filing: 26.07.2013
(51) Int. Cl.: H04N 7/15

(54) **CONFIGURATION PARAMETER OBTAINING METHOD AND DEVICE**

(30) Priority: 07.09.2012 CN 201210329938
(71) Applicant: ZTE Corporation, Shenzhen, Guangdong 518057 (CN)
(72) Inventor: FENG, Tao, Shenzhen Guangdong 518057 (CN)
(74) Representative: Bongiovanni, Simone
(86) International application number: PCT/CN2013/080219
(87) International publication number: WO 2013/174344

(57) **Abstract**

Disclosed are a method and device for obtaining configuration parameter. The method comprises: the terminal management platform obtains identifier information of the videoconferencing terminal to be configured; the terminal management platform determines the conference room in which the videoconferencing terminal is located according to the identifier information; and the terminal management platform issues to the videoconferencing terminal at least one configuration parameter preconfigured which corresponds to the conference room. According to the technical solution provided in the present invention, the videoconferencing terminal is immediately usable when being powered on, the parameter configuration complexity of the videoconferencing terminal is reduced, the maintenance difficulty of the videoconferencing terminal is reduced, and the working load for maintaining a videoconferencing system is reduced.

## Description

### Technical Field

The present invention relates to communication field, and in particular to a method and device for obtaining configuration parameter.

### Background

Videoconferencing is a communication technology which uses a television and a dedicated device to connect conference rooms in two or multiple places through a communication network so as to convene a real-time, two-way and interactive videoconference in the form of television. A videoconferencing terminal is an important device in a videoconferencing system.

Related parameters of the videoconferencing terminal need to be configured for normal functioning before it is used. Currently, there are mainly the following several ways for configuring the videoconferencing terminal.

Way 1: A user configures various parameters of a terminal on site by directly using a Graphic User Interface (GUI) and other ways, wherein the parameters may include: a terminal name, an H.323 protocol, a Session Initiation Protocol (SIP) and so on. Such way is disadvantaged in that the user needs to operate the terminal on site when configuring. Thus, it requires relatively high specific skill of the user; and the user is able to configure only after mastering the parameter configuration-related technical knowledge. In addition, when the configuration parameters need to be modified, it is needed to modify various configuration parameters of the terminal one by one; furthermore, when a terminal is replaced, it is needed to reconfigure related parameters. To sum up, such way is not convenient to maintain and the working load is heavy.

Way 2: A user name and password are configured on the terminal; the user name and password are used to register on a terminal management platform; and the terminal management platform determines configuration data (such as a terminal name, an H.323 protocol and an SIP) needed by the terminal to use according to the user name reported by the terminal and issues the configuration data to the terminal. Although such way may reduce the maintenance work of the user, it still has the following disadvantages: it is needed to obtain the user name and password from the terminal management platform before configuration, and it must be ensured that the terminal and the terminal management platform are completely consistent; if the terminal is replaced by a new one, it is needed to reconfigure the user name and password on the new terminal. When the terminal resets parameters to the factory settings, it is also needed to reconfigure the user name and password on the terminal; at this time, the user name and password need to be modified on both the terminal and the terminal management platform simultaneously. In addition, if a location of the terminal is changed but the user name is not modified timely, then the terminal management platform will issue wrong configuration parameters, thus conflicting with the terminal using the same parameters.

Way 3: There is no need to configure the user name and password on the terminal, and the terminal management platform may determine configuration parameters (such as a terminal name, an H.323 protocol and an SIP) needed by the terminal to use according to an Internet Protocol (IP) address or a Media Access Control (MAC) address or a serial number of the terminal and issues the configuration parameters to the terminal. Such way needs to manually configure the IP address or the MAC address or the serial number of the terminal on the terminal management platform; when the terminal is replaced or the IP address of the terminal is changed, it is needed to manually modify corresponding parameters on the terminal management platform. Therefore such way has so much inconvenience in use.

With the development of videoconferencing, the number of the videoconferencing terminals is increasing, but the parameter configuration ways of the videoconferencing terminal in related art have their own limitations.

### Summary

The embodiment of the present invention provides a method and device for obtaining configuration parameter, so as to at least solve the problem that the parameter configuration ways of the videoconferencing terminal are relatively complex and lack of flexibility in the related art.

According to one embodiment of the present invention, a method for obtaining configuration parameter is provided.

The method for obtaining configuration parameter comprising: obtaining, by a terminal management platform, identifier information of a videoconferencing terminal to be configured; determining, by the terminal management platform, a conference room in which the videoconferencing terminal is located according to the identifier information; and issuing, by the terminal management platform at least one configuration parameter preconfigured which corresponds to the conference room to the videoconferencing terminal.

Preferably, obtaining, by the terminal management platform, the identifier information of the videoconferencing terminal comprises: receiving, by the terminal management platform, a registration message reported by the videoconferencing terminal, wherein the registration message carries the identifier information; and obtaining, by the terminal management platform the identifier information from the registration message, wherein the identifier information includes an IP address and a MAC address.

Preferably, determining, by the terminal management platform, the conference room in which the videoconferencing terminal is located according to the identifier information comprises: determining, by the terminal management platform, a port of a network device that the videoconferencing terminal accesses according to the obtained IP address and MAC address; and obtaining, by the terminal management platform, identifier information of the conference room according to the determined port of the network device.

Preferably, issuing, by the terminal management platform, the at least one configuration parameter preconfigured, which corresponds to the conference room, to the videoconferencing terminal comprises: searching, by the terminal management platform the at least one configuration parameter which corresponds to the conference room according to the obtained identifier information of the conference room; and issuing, by the terminal management platform, to the videoconferencing terminal the at least one configuration parameter found which corresponds to the conference room.

Preferably, the at least one configuration parameter which corresponds to the conference room includes at least one of the followings: a terminal name, an H.323 protocol, and an SIP.

According to another embodiment of the present invention, a device for obtaining configuration parameter is provided.

The device for obtaining configuration parameter comprising: an obtaining entity, configured to obtain identifier information of a videoconferencing terminal to be configured; a determining entity, configured to determine a conference room in which the videoconferencing terminal is located according to the identifier information; and an issuing entity, configured to issue to the videoconferencing terminal at least one configuration parameter preconfigured which corresponds to the conference room.

Preferably, the obtaining entity comprises: a receiving unit configured to receive a registration message reported by the videoconferencing terminal, wherein the registration message carries the identifier information; and a first obtaining unit configured to obtain the identifier information from the registration message, wherein the identifier information includes an IP address and a MAC address.

Preferably, the determining entity comprises: a determining unit configured to determine a port of a network device that the videoconferencing terminal accesses according to the obtained IP address and MAC address; and a second obtaining unit configured to obtain identifier information of the conference room according to the determined port of the network device.

Preferably, the issuing entity comprises: a searching unit configured to search the at least one configuration parameter which corresponds to the conference room according to the obtained identifier information of the conference room; and an issuing unit configured to issue to the videoconferencing terminal the at least one configuration parameter found which corresponds to the conference room.

Preferably, the at least one configuration parameter which corresponds to the conference room includes at least one of the followings: a terminal name, an H.323 protocol, and an SIP.

In the embodiments of the present invention, a videoconferencing terminal needing to obtain at least one configuration parameter of conference room reports identifier information to a terminal management platform; the terminal management platform determines the conference room in which the videoconferencing terminal is located according to the identifier information; and the terminal management platform issues to the videoconferencing terminal at least one configuration parameter preconfigured which corresponds to the conference room; therefore, the problems in related art that the parameter configuration ways of the videoconferencing terminal are relatively complex and lack of flexibility is solved; furthermore, the videoconferencing terminal is immediately usable when being powered on, the parameter configuration complexity of the videoconferencing terminal is reduced, the maintenance difficulty of the videoconferencing terminal is reduced, and the working load for maintaining the videoconferencing system is reduced.

### Brief Description of the Drawings

Drawings, provided for further understanding of the present invention and forming a part of the specification, are used to explain the present invention together with embodiments of the present invention rather than to limit the present invention, wherein:
Fig. 1 is a flowchart of a method for obtaining configuration parameter according to an embodiment of the present invention;
Fig. 2 is a structural block diagram of a device for obtaining configuration parameter according to an embodiment of the present invention;
Fig. 3 is a preferred structural block diagram of a device for obtaining configuration parameter according to an embodiment of the present invention;
Fig. 4 is a preferred structural diagram of a system for configuring automatically a videoconferencing terminal according to an embodiment of the present invention; and
Fig. 5 is a preferred flowchart showing that parameters of a videoconferencing terminal based on Fig. 4 are configured according to an embodiment of the present invention.

### Detailed Description of Embodiments

The present invention will be described hereinafter in detail with reference to the drawing and in conjunction with the embodiments. It needs to be noted that the embodiments of the present application and the features in the embodiments can be combined with each other if no conflict exists.

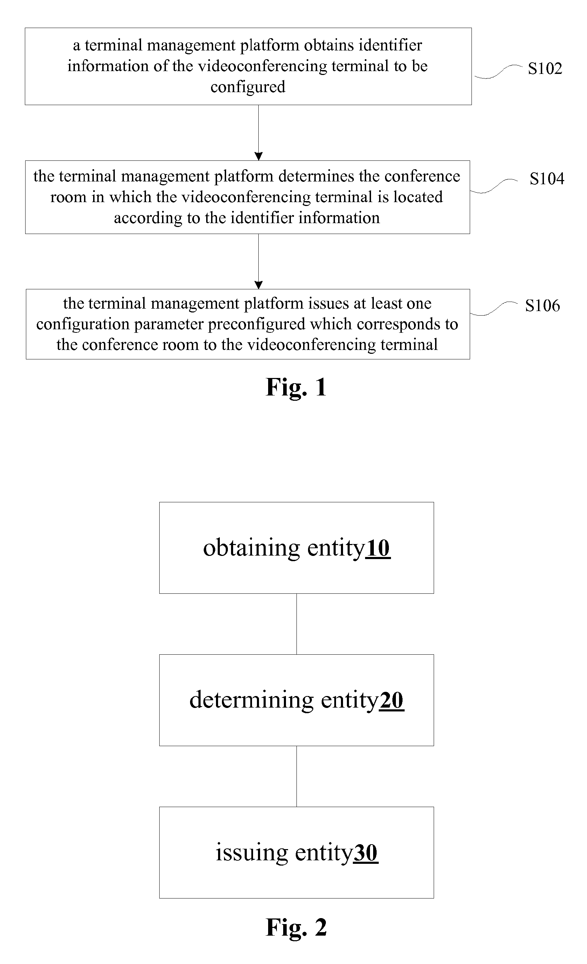

Fig. 1 is a flowchart of a method for obtaining configuration parameter according to an embodiment of the present invention. As shown in Fig. 1, the method comprises the following steps:
step S102: a terminal management platform obtains identifier information of a videoconferencing terminal to be configured;
step S104: the terminal management platform determines a conference room in which the videoconferencing terminal is located according to the identifier information; and
step S106: the terminal management platform issues at least one configuration parameters preconfigured which corresponds to the conference room to the videoconferencing terminal.

In the related art, the parameter configuration ways of the videoconferencing terminal are relatively complex and lack of flexibility. By using the method shown in Fig. 1, the videoconferencing terminals are managed uniformly based on their geographical locations, wherein the geographical locations are mainly the conference rooms because the videoconferencing terminals are mainly used in the conference rooms. The videoconferencing terminal needing to obtain the at least one configuration parameter of conference room reports the identifier information to the terminal management platform; the terminal management platform determines the conference room in which the videoconferencing terminal is located according to the identifier information; and the terminal management platform issues to the videoconferencing terminal the at least one configuration parameters preconfigured which corresponds to the conference room; therefore, the problems in the related art that the parameter configuration ways of the videoconferencing terminal are relatively complex and lack of flexibility is solved; furthermore, the videoconferencing terminal is immediately usable when being powered on, the parameter configuration complexity of the videoconferencing terminal is reduced, the maintenance difficulty of the videoconferencing terminal is reduced, and the working load for maintaining the videoconferencing system is reduced.

In a preferred implementation process, the at least one configuration parameter corresponding to the conference room may include but not limited to at least one of the followings: a terminal name, an H.323 protocol and an SIP.

In an preferred embodiments, the terminal management platform maintains a set of configuration parameters for each videoconferencing terminal in each conference room, wherein the configuration parameters comprises: a terminal name, an H.323 protocol, an SIP and so on, and these parameters are set for the conference room but not for the videoconferencing terminal in each conference room, so that no matter the new videoconferencing terminal or the replaced videoconferencing terminal, its configuration process is consistent. The configuration process will not be influenced even the IP address of the videoconferencing terminal changes, and there is no need to perform any manual modification on the terminal management platform and the videoconferencing terminal.

Preferably, in step 102, the terminal management platform obtaining the identifier information of the videoconferencing terminal comprises the following steps:
step S1: the terminal management platform receives a registration message reported by the videoconferencing terminal, wherein the registration message carries the identifier information; and
step S2: the terminal management platform obtains the identifier information from the registration message, wherein the identifier information may include but not limited to: an IP address and an MAC address.

In the preferred embodiments, after the videoconferencing terminal is powered on or the IP address of the videoconferencing terminal changes, the videoconferencing terminal may send a registration message to the terminal management platform via a network device, wherein the parameter information carried in the registration message may include but not limited to: an IP address of videoconferencing terminal, an MAC address of videoconferencing terminal, a product serial number of videoconferencing terminal and a product model of videoconferencing terminal.

Preferably, in step S104, the terminal management platform determining the conference room in which the videoconferencing terminal is located according to the identifier information comprises the following steps:
step S3: the terminal management platform determines a port of the network device that the videoconferencing terminal accesses according to the obtained IP address and MAC address; and
step S4: the terminal management platform obtains the identifier information of the conference room according to the determined port of the network device.

In the preferred embodiments, the terminal management platform search, using the SNMP/TT069 protocol and other network management protocols, the network device (for example, a router, a switch and other device which forms an IP communication network) for the IP address and the MAC address that each port of the network device connects currently. Because topological diagrams of all network devices and all videoconferencing terminals in each conference room are formed in advance, each port in the network device and each conference room are in one-to-one correspondence in physical connection, that is, each port in the network device can only connect one conference room; thus, the port of the network device, the identifier information of the conference room, the IP address of the videoconferencing terminal and the MAC address of the videoconferencing terminal form a set of bound data, and adopting any parameter in this set may determine other related parameters uniquely. Not only that, using the bound data may also perform safety management to the videoconferencing terminal simultaneously, so that only such videoconferencing terminal accessing a specified port of network device may use the conference room-related parameters.

It should be noted that the IP address related to each port of the network device may be inquired from not only the network device but also a network management platform of the network device, and the ultimate aim is to obtain the set of bound data including the port of the network device, the identifier information of the conference room, the IP address of the videoconferencing terminal and the MAC address of the videoconferencing terminal.

Preferably, in step S106, the terminal management platform issuing to the videoconferencing terminal the at least one configuration parameter preconfigured which corresponds to the conference room comprises the following steps:
step S5: the terminal management platform searches the at least one configuration parameter which corresponds to the conference room according to the obtained identifier information of the conference room; and
step S6: the terminal management platform issues to the videoconferencing terminal the found configuration parameter which corresponds to the conference room.

In a preferred embodiment, the terminal management platform may determine the port of network device that the videoconferencing terminal connects according to the IP address and the MAC address reported by the videoconferencing terminal, and the terminal management platform may determine, through the port of network device, that in which conference room the videoconferencing terminal is located, then, the terminal management platform obtains the at least one configuration parameter (for example, a terminal name, an H.323 protocol, an SIP) of the conference room and issues it to the videoconferencing terminal. After obtaining the at least one configuration parameter of the conference room, the videoconferencing terminal may make normal call. When the videoconferencing terminal is replaced or the IP address of the videoconferencing terminal changes, both the videoconferencing terminal and the terminal management platform do not need to carry out extra configuration operation.

Fig. 2 is a structural block diagram of a device for obtaining configuration parameter according to an embodiment of the present invention. As shown in Fig. 2, the device for obtaining configuration parameter comprises: an obtaining entity 10 configured to obtain identifier information of the videoconferencing terminal to be configured; a determining entity 20 configured to determine the conference room in which the videoconferencing terminal is located according to the identifier information; and an issuing entity 30 configured to issue to the videoconferencing terminal at least one configuration parameter preconfigured which corresponds to the conference room.

Through the above-mentioned device shown in Fig. 2, the videoconferencing terminal is immediately usable when being powered on, the parameter configuration complexity of the videoconferencing terminal is reduced, the maintenance difficulty of the videoconferencing terminal is reduced, and the working load for maintaining the videoconferencing system is reduced.

In the preferred embodiment, the at least one configuration parameter corresponding to the conference room may include but not limited to at least one of the followings: a terminal name, an H.323 protocol and an SIP.

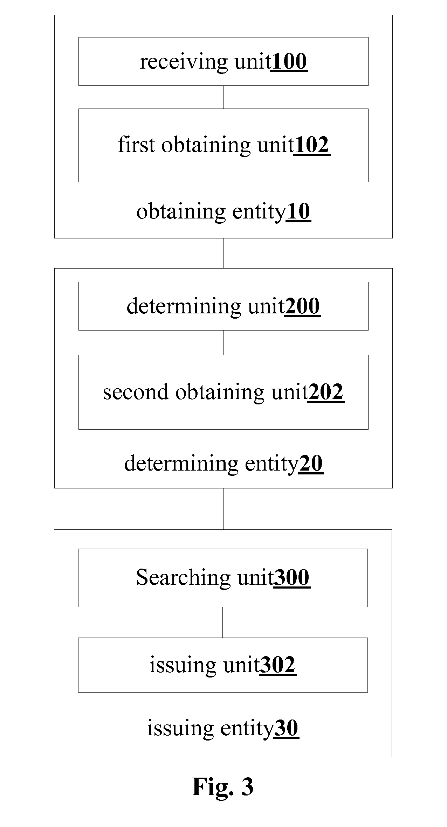

Preferably, as shown in Fig. 3, the above obtaining entity 10 comprises: a receiving unit 100 configured to receive a registration message reported by the videoconferencing terminal, wherein the registration message carries the identifier information; and a first obtaining unit 102 configured to obtain the identifier information from the registration message, wherein the identifier information may include but not limited to: an IP address and an MAC address.

Preferably, as shown in Fig. 3, the above determining entity 20 may comprise: a determining unit 200 configured to determine a port of a network device that the videoconferencing terminal accesses according to the obtained IP address and MAC address; and a second obtaining unit 202 configured to obtain identifier information of the conference room according to the determined port of the network device.

Preferably, as shown in Fig. 3, the above issuing entity 30 may comprise: a finding unit 300 configured to search the at least one configuration parameter which corresponds to the conference room according to the obtained identifier information of the conference room; and an issuing unit 302 configured to issue to the videoconferencing terminal the at least one configuration parameter found which corresponds to the conference room.

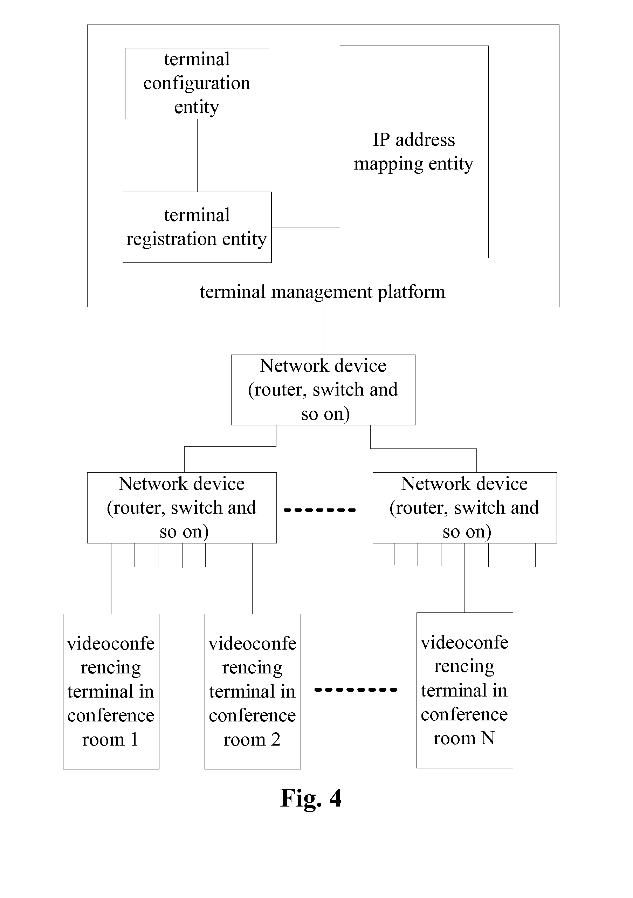

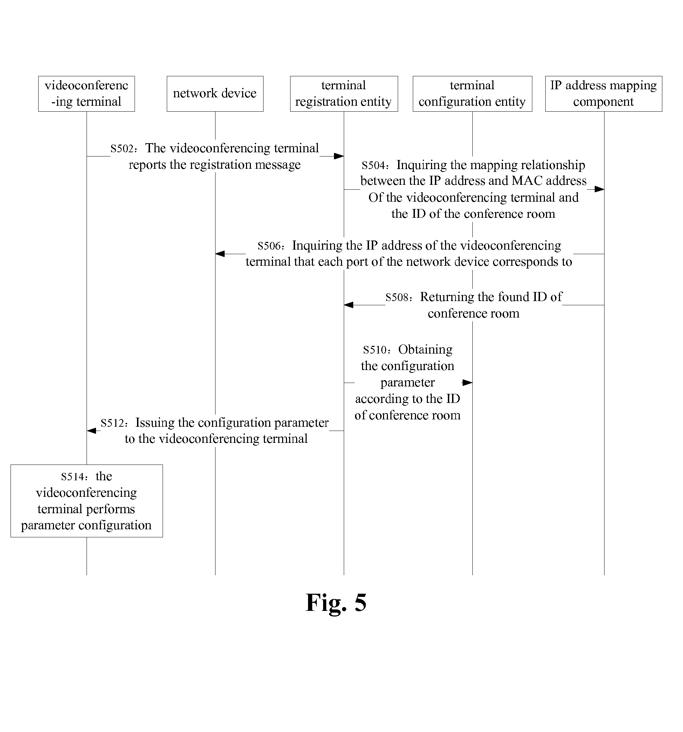

The above preferred implementation process is further described below with reference to the preferred implementation ways shown in Fig. 4 and Fig. 5.

Fig. 4 is a preferred structural diagram of a system for configuring automatically a videoconferencing terminal according to an embodiment of the present invention. As shown in Fig. 4, the system may comprise: a videoconferencing terminal, a network device and a terminal management platform, wherein the terminal management platform may comprise: a terminal registration entity (being equal to the above obtaining entity), an IP address mapping entity (being equal to the above determining entity), and a terminal configuration entity (being equal to a part of the above issuing entity); the network device may be a router or a switch. It should be noted that, in the preferred embodiment, description takes only the router for example, but it is also applicable to the switch and other network devices, so it will not be repeated here.

After the videoconferencing terminal is powered on or the IP address of the videoconferencing terminal changes, firstly, the videoconferencing terminal sends through a router a registration message to the terminal management platform, wherein parameter information carried in the registration message may include but not limited to: an IP address of the videoconferencing terminal, an MAC address of the videoconferencing terminal, a product serial number of the videoconferencing terminal, and a product model of the videoconferencing terminal; the terminal registration entity of the management platform of the terminal takes charge of processing the registration message; secondly, the terminal configuration entity of the terminal management platform takes charge of maintaining the least one configuration parameter of each terminal in each conference room, wherein the at least one configuration parameter of each terminal may include but not limited to: a user name, an H.323 protocol and an SIP; then, the IP address mapping entity may inquire, using the SNMP/TT069 protocol and other network management protocols, the network device for the IP address and the MAC address that each port of the network device connects currently; because topological diagrams of all network devices and all videoconferencing terminals in each conference room are formed in advance, each port in the network device and each conference room are in one-to-one correspondence in physical connection; that is, each port in the network device may only connect one conference room; It can be seen that the port of the network device, the identifier information of the conference room, the IP address of the videoconferencing terminal and the MAC address of the videoconferencing terminal form a set of bound data, and other related parameters may determined uniquely according to any parameter in the set; the port of network device that the videoconferencing terminal connects may be determined according to the IP address and the MAC address reported by the videoconferencing terminal, and the conference room that the port connects may be determined according to the port of network device. Table 1 shows a mapping relationship between the IP address and the MAC address reported by the videoconferencing terminal and the conference room. As shown in Table 1,

**Table 1**

| **Network device ID** | **Port ID** | **Conference room ID** | **IP address of Terminal** | **MAC address of Terminal** |
|---|---|---|---|---|
| **Network device-1** | **Port-1** | **Conference room-1** | **10.1.1.1** | **0D:0D:xx:yy:zz:ab** |
| **Network device-1** | **Port-2** | **Conference room-2** | **10.1.1.2** | **0D:0D:xx:yy:zz:cd** |
| **------** | **------** | **------** | **------** | **------** |
| **------** | **------** | **------** | **------** | **------** |
| **Network device-M** | **Port-1** | **Conference room-N** | **10.1.1.6** | **0D:0D:xx:yy:zz:ef** |

At last, the terminal management platform obtains, through the IP address mapping entity, ID of the conference room in which the videoconferencing terminal is located currently according to the IP address and the MAC address during registration of the videoconferencing terminal, and then obtain the at least one configuration parameter needed by the videoconferencing terminal from the terminal configuration entity according to the ID of the conference room. The terminal management platform issues the at least one configuration parameter obtained to the videoconferencing terminal, so as to complete an automatic configuration process of the videoconferencing terminal.

Fig. 5 is a preferred flowchart showing that parameters of a videoconferencing terminal based on Fig. 4 are configured according to an embodiment of the present invention. As shown in Fig. 5, the flow comprises the following steps:
step S502: after a videoconferencing terminal is powered on or an IP address of the videoconferencing terminal changes, firstly, the videoconferencing terminal sends through a router a registration message to a terminal management platform, wherein parameter information carried in the registration message may include but not limited to: the IP address of the videoconferencing terminal, the MAC address of the videoconferencing terminal, a product serial number of the videoconferencing terminal, and a product model of the videoconferencing terminal; the terminal registration entity of the terminal management platform takes charge of processing the registration message;
step S504: the terminal registration entity inquires the IP address mapping entity for the ID of conference room;
step S506: the IP address mapping entity uses the SNMP/TT069 protocol and other network management protocols to inquire a network device for the IP address and the MAC address that each port of the network device connects, and generates a mapping table illustrating a mapping relationship between the IP address and MAC address of the videoconferencing terminal and the ID of the conference room;
step S508: the IP address mapping entity inquires the mapping table, and sends the ID of the conference room in which the videoconferencing terminal is located currently to the terminal registration entity;
step S510: the terminal registration entity uses the ID of the conference room to obtain the at least one configuration parameter needed by the videoconferencing terminal from the terminal configuration entity;
step S512: the terminal management platform issues the at least one configuration parameter to the videoconferencing terminal; and
step S514: the videoconferencing terminal enters a normal working state after configuring itself using the parameter obtained from the terminal management platform.

In the above-mentioned description, it can be seen that the present embodiments achieve the following technical effects (which needs to be noted that these effects are that some preferred embodiments may achieve): compared with the related art, the videoconferencing terminal is immediately usable when being powered on, the parameter configuration complexity of the videoconferencing terminal is reduced, the maintenance difficulty of the videoconferencing terminal is reduced, and the working load for maintaining a videoconferencing system is reduced.

Obviously, those skilled in the art shall understand that the above-mentioned components and steps of the present invention can be realized by using general purpose calculating device, can be integrated in one calculating device or distributed on a network which consists of a plurality of calculating devices. Alternatively, the components and the steps of the present invention can be realized by using the executable program code of the calculating device. Consequently, they can be stored in the storing device and executed by the calculating device, or they are made into integrated circuit component respectively, or a plurality of components or steps thereof are made into one integrated circuit component. In this way, the present invention is not restricted to any particular hardware and software combination.

The descriptions above are only the preferable embodiment of the present invention, which are not used to restrict the present invention. For those skilled in the art, the present invention may have various changes and variations. Any amendments, equivalent substitutions, improvements, etc. within the present invention are all included in the scope of the protection of the present invention.

## Claims

1. A method for obtaining configuration parameter, **characterized by** comprising:
obtaining, by a terminal management platform, identifier information of a videoconferencing terminal to be configured;
determining, by the terminal management platform, a conference room in which the videoconferencing terminal is located according to the identifier information; and
issuing, by the terminal management platform, at least one configuration parameter preconfigured, which corresponds to the conference room, to the videoconferencing terminal.

2. The method according to claim 1, **characterized in that** obtaining, by the terminal management platform, the identifier information of the videoconferencing terminal comprises:
receiving, by the terminal management platform, a registration message reported by the videoconferencing terminal, wherein the registration message carries the identifier information; and
obtaining, by the terminal management platform, the identifier information from the registration message, wherein the identifier information comprises an Internet Protocol (IP) address and a Media Access Control (MAC) address.

3. The method according to claim 2, **characterized in that** determining, by the terminal management platform, the conference room in which the videoconferencing terminal is located according to the identifier information comprises:
determining, by the terminal management platform, a port of a network device that the videoconferencing terminal accesses according to the obtained IP address and MAC address; and
obtaining, by the terminal management platform, identifier information of the conference room according to the determined port of the network device.

4. The method according to claim 3, **characterized in that** issuing, by the terminal management platform, the at least one configuration parameter preconfigured, which corresponds to the conference room, to the videoconferencing terminal comprises:
searching, by the terminal management platform, the at least one configuration parameter which corresponds to the conference room according to the obtained identifier information of the conference room; and
issuing, by the terminal management platform, to the videoconferencing terminal the at least one configuration parameter found which corresponds to the conference room.

5. The method according to any one of claims 1 to 4, **characterized in that** the at least one configuration parameter which corresponds to the conference room comprises at least one of the followings: a terminal name, an H.323 protocol, and a Session Initiation Protocol (SIP).

6. A device for obtaining configuration parameter, **characterized by** comprising:
an obtaining entity configured to obtain identifier information of a videoconferencing terminal to be configured;
a determining entity configured to determine a conference room in which the videoconferencing terminal is located according to the identifier information; and
an issuing entity configured to issue to the videoconferencing terminal at least one configuration parameter preconfigured which corresponds to the conference room.

7. The device according to claim 6, **characterized in that** the obtaining entity comprises:
a receiving unit configured to receive a registration message reported by the videoconferencing terminal, wherein the registration message carries the identifier information; and
a first obtaining unit configured to obtain the identifier information from the registration message, wherein the identifier information comprises an Internet Protocol (IP) address and a Media Access Control (MAC) address.

8. The device according to claim 7, **characterized in that** the determining entity comprises:
a determining unit configured to determine a port of a network device that the videoconferencing terminal accesses according to the obtained IP address and MAC address; and
a second obtaining unit configured to obtain identifier information of the conference room according to the determined port of the network device.

9. The device according to claim 8, **characterized in that** the issuing entity comprises:
a searching unit configured to search the at least one configuration parameter which corresponds to the conference room according to the obtained identifier information of the conference room; and
an issuing unit configured to issue to the videoconferencing terminal the at least one configuration parameter found which corresponds to the conference room.

10. The device according to any one of claims 6 to 9, **characterized in that** the at least one configuration parameter which corresponds to the conference room comprises at least one of the followings: a terminal name, an H.323 protocol, and a Session Initiation Protocol (SIP).
